# EUROPEAN PATENT APPLICATION

(11) **EP 4 589 062 A1**
(43) Date of publication of application: **23.07.2025**
(21) Application number: 24217434.0
(22) Date of filing: 04.12.2024
(51) Int. Cl.: D06F 33/30, D06F 101/14, D06F 103/38, D06F 103/68, D06F 105/50, D06F 105/52

(54) **METHOD AND SYSTEM FOR AUTOMATIC SETTING OF OPERATING PROGRAM OF HOUSEHOLD APPLIANCE AND HOUSEHOLD APPLIANCE**

(30) Priority: 17.01.2024 CN 202410071306
(71) Applicant: BSH Hausgeräte GmbH, 81739 München (DE)
(72) Inventor: Qu, Dean, Nanjing 210046 (CN); Ju, Wangkou, Nanjing 210046 (CN); Pang, Zhipeng, Nanjing 210046 (CN); Pan, Jie, Nanjing 210046 (CN)

(57) **Abstract**

A method and system for automatic setting of an operating program of a household appliance, and a household appliance are provided. The method includes: obtaining a current time in response to detecting that a preset trigger condition is met, where the preset trigger condition is used for triggering automatic setting of an operating program; inputting the current time into a preset machine learning model to obtain a current operating program, where the preset machine learning model is used for predicting the current operating program according to the current time and a historical operating program of the household appliance at a related time in history, and the related time is associated with the current time; and setting the household appliance to operate according to the current operating program. Through the solution of this disclosure, an operating program that meets a user requirement at the current time can be automatically set more accurately when the household appliance operates this time, thereby further improving an intelligence degree of the household appliance and user satisfaction.

## Description

Embodiments of the present invention relate to the field of household appliance technologies, and specifically, to a method and a system for automatic setting of an operating program of a household appliance, and a household appliance.

With the development of household appliance technologies, various household appliances tend to be increasingly intelligent and personalized in design to meet users' increasingly high requirements for operation convenience. A major feature of an existing household appliance is that automatic setting for an operating program is enabled when the household appliance is turned on, without manual setting by a user, to improve use convenience of the user and provide a better experience.

A washing machine is used as an example. Currently, some washing machines have a memory mode, and each time the washing machine is turned on, the washing machine operates by default according to an operating program set when the washing machine was turned on last time. However, in practice, a simple memory mode cannot well meet a user requirement. For example, when the user turned on the washing machine last time, the operating program was set to quick wash to shorten a washing time, and when the user turns on the washing machine this time, delicate clothes such as a woolen sweater need to be washed. In this case, it is obviously inappropriate for the washing machine to automatically set the operating program to quick wash according to the memory mode, and the user still needs to manually change the operating program of the washing machine to soft wash. Such an operation manner that still requires manual intervention of the user obviously contradicts an original intelligent design intention of the washing machine.

Therefore, there is an urgent need to provide a more intelligent solution of automatic setting of an operating program, which can truly achieve "think what the user wants", and each time the household appliance operates, an operating program that meets a use requirement of the user at a current time is automatically set for the user more accurately.

An objective of embodiments of the present invention is to provide an improved method and system for automatic setting of an operating program of a household appliance, and a household appliance.

Therefore, an embodiment of the present invention provides a method for automatic setting of an operating program of a household appliance. The method includes: obtaining a current time in response to detecting that a preset trigger condition is met, where the preset trigger condition is used for triggering automatic setting of an operating program; inputting the current time into a preset machine learning model to obtain a current operating program, where the preset machine learning model is used for predicting the current operating program according to the current time and a historical operating program of the household appliance at a related time in history, and the related time is associated with the current time; and setting the household appliance to operate according to the current operating program.

Compared with an existing household appliance in which a memory mode is used to automatically set an operating program, which is not intelligent enough and is low in accuracy of matching between an automatically set operating program and an actual requirement of a user, in this implementation solution, when the household appliance operates this time, an operating program that meets the user requirement at the current time can be automatically set more accurately when the household appliance operates this time, thereby further improving an intelligence degree of the household appliance and user satisfaction. Specifically, the current time when the household appliance meets the preset trigger condition is used as one of consideration factors and input into the preset machine learning model, and a current operating program is predicted through processing and computing by the preset machine learning model. The preset trigger condition may be, for example, that the household appliance is turned on, or may be, for example, that a function of automatic setting of an operating program of the household appliance is enabled. Further, different styles/habits of the user in using the household appliance at different times are fully considered based on the preset machine learning model, a use requirement of the user at the current time is predicted based on an operation history of the user at the related time, and then an adapted current operating program is automatically set. In this way, the operating program can be set more intelligently after the household appliance is turned on, so that the user is provided with the operating program that meets the user requirement at the current time more accurately.

Further, when performing prediction, the preset machine learning model comprehensively considers a historical operating program that is historically set for the household appliance at the related time. In this way, the preset machine learning model can learn and memorize behaviors of the user and use habits of the user according to a historical use record of the user, and predict a use requirement of the user when the household appliance operates this time according to historical data, thereby providing the user with a more appropriate personalized operating program.

Further, the preset machine learning model predicts and outputs the current operating program through the historical data. As the historical data continuously expands, the household appliance can be increasingly intelligent as the user uses the household appliance. When a use habit of the user changes, the household appliance can also make an adjustment in time. For household appliances of different users, as the use habits of different users are different, prediction results of the household appliances at the same current time are increasingly different. In this way, according to this implementation solution, the user can be allowed to personalize the operating program of the household appliance, and this personalization is with little or no perception of the user, and can be implemented without manual setting by the user, thereby greatly improving the intelligence degree of the household appliance and helping optimize user experience.

Optionally, the related time being associated with the current time includes: the related time and the current time have a preset time interval, and the preset time interval includes a calendar week. In this way, the operating program set by the user when using the household appliance every day is periodically recorded in units of weeks, which can reflect differences between the use habits of the user in the household appliance at different times, so that the current operating program is set in a more targeted manner to more intelligently adapt to the use requirements of the user at the current time. Further, when the use habits of the user have a cyclical trend, the cyclical feature is reflected by the preset time interval, so that a predicted current operating program conforms to the cyclical trend. Further, the preset time interval includes the calendar week, which can also adapt to work, pace of life, and habits of most users.

Optionally, different times correspond to different preset machine learning models, and the inputting the current time into a preset machine learning model to obtain a current operating program includes: determining a corresponding preset machine learning model according to the current time; and inputting the current time into the determined preset machine learning model to obtain the current operating program. In this way, training and prediction are performed by using a respective preset machine learning model at different times, which is beneficial to improving accuracy of model prediction. Further, each model is trained and iteratively updated by using historical data at a respective related time, so that each model is more focused on predicting a corresponding operating program according to the use habits of the user at a respective corresponding time.

Optionally, seven preset machine learning models are provided and each corresponds to each day of the calendar week. In this way, seven days in a week respectively correspond to one of the seven preset machine learning models, and each of the preset machine learning models can focus on predicting an operating program required when the user uses the household appliance that day.

Optionally, the preset machine learning models respectively corresponding to different times are the same when the household appliance is turned on for the first time in history, and independently change as the household appliance is used. In other words, a same preset machine learning model is used by default initially every day, and as the user uses the preset machine learning model, differences are gradually generated according to the use habits of the user. In this way, a program burning process performed when the household appliance is factory set can be simplified, helping reduce manufacturing costs and process complexity. Further, with the use of the user, each model gradually accumulates historical data for learning and iterative update according to a program setting habit of the user when the user uses the household appliance at the corresponding time, thereby intelligently personalizing the operating program according to the use of the user.

Optionally, the preset machine learning model is iteratively updated as a number of uses of the household appliance increases. In this way, as the user continuously trains the preset machine learning model by using accumulation of data, prediction of the preset machine learning model is more targeted and can reflect personalization of the user. Optionally, an iterative update process of the preset machine learning model includes: receiving feedback data, where the feedback data is used for representing a set satisfaction for the historical operating program; constructing a training set and a verification set based on the feedback data received within a period of time and the corresponding historical operating program; training the preset machine learning model based on the training set to obtain an updated preset machine learning model; and verifying the updated preset machine learning model based on the verification set. In this way, the model is automatically optimized and improved according to satisfaction feedback of the user set for the operating program when the household appliance is used historically, so that a more appropriate and accurate operating program is automatically set after the household appliance is turned on next time, thereby significantly improving the satisfaction of the user.

Optionally, the feedback data includes a satisfaction score for at least one parameter, and the parameter is selected from dryness, noise, a twine degree, and correctness of the automatic setting of an operating program. In this way, the preset machine learning model can optimize and update the setting that the user is unsatisfied or not very satisfied in a more targeted manner.

Optionally, the method for automatic setting of an operating program of a household appliance further includes: transmitting prompt information, where the prompt information includes an opinion feedback table; and receiving the opinion feedback table, and generating the feedback data based on the opinion feedback table. In this way, the user is actively prompted to submit the feedback, and as much the feedback data as possible is collected for training the model, thereby optimizing a model training effect.

Optionally, the prompt information and/or the opinion feedback table is transmitted through a display and/or input unit of the household appliance. In this way, the user is prompted for the feedback through a human-computer interaction interface arranged on the household appliance, and the feedback data is received, to be used as a basis for model training.

Optionally, the prompt information and/or the opinion feedback table is transmitted through a terminal device associated with the household appliance. In this way, the user can receive the opinion feedback table and upload the feedback data anytime and anywhere, so that a feedback process is more convenient.

Therefore, an embodiment of the present invention further provides a household appliance, including: a body; and a control module, arranged on the body, the control module being configured to perform the foregoing method for automatic setting of an operating program of a household appliance. In this way, iterative update actions of the preset machine learning model are all completed in the household appliance, so that the household appliance can complete model optimization, and has a high response speed. Further, the iterative update actions of the preset machine learning model do not need to be supported by an external server and does not need to rely on a network, so that the model optimization can be implemented even if the household appliance is not connected to the network.

Optionally, the household appliance is selected from a washing machine, a washer-dryer, and a dryer. In this way, for a feature that the user has greatly different laundry styles at different times (for example, weekdays and weekends), the method in this implementation solution is applied to the household appliance such as a washing machine, so that the washing machine can more intelligently provide a washing and protection function for the user. Further, in addition to the washing machine, the method for automatic setting of an operating program of a household appliance according to this implementation solution may further be applied to other household appliances of washing/drying types, so that an entire washing-drying process is more intelligent and convenient.

Optionally, the household appliance further includes: a communication module, arranged on the body, the control module receiving feedback data through the communication module; and/or a display and/or input unit, arranged on the body, the control module receiving the feedback data through the display and/or input unit. In this way, the user can transmit a satisfaction through network communication, or can directly input feedback information through the display and/or input unit, thereby improving convenience of feedback.

Therefore, an embodiment of the present invention further provides a system for automatic setting of an operating program of a household appliance, including: a household appliance, including a body and a control module, the control module being configured to perform the foregoing method for automatic setting of an operating program of a household appliance; and a server, communicating with the control module, the server being configured to synchronize the preset machine learning model to the control module. In this way, the server may be configured to store historical data, including the historical operating program and corresponding feedback data, and retrain the model based on the historical data, so that a current operating program predicted based on an updated model when the household appliance is turned on next time is more in line with a use habit of the user at the current time. Further, the server is arranged outside the household appliance, which helps reduce a number of components in the household appliance and reduce costs.

Optionally, the server is configured to iteratively update the preset machine learning model based on a received historical operating program and feedback data of the household appliance, and synchronize the updated preset machine learning model to the control module. In this way, under the high computing power of the server, an iterative response speed of the preset machine learning model may be further improved.

Optionally, the system for automatic setting of an operating program of a household appliance further includes: a communication module, arranged on the body, the control module communicating with the server through the communication module. In this way, the household appliance establishes a communication connection to the outside (for example, the server) through the communication module, to implement remote update of the preset machine learning model.

Optionally, the system for automatic setting of an operating program of a household appliance further includes: a display and/or input unit, arranged on the body and communicating with the control module, the display and/or input unit being configured to receive feedback data. In this way, the user may locally submit the feedback data on the household appliance, and the household appliance summarizes the feedback data and the corresponding historical operating program to the server, so that the server iteratively updates the preset machine learning model based on these data.
FIG. 1 is a flowchart of a method for automatic setting of an operating program of a household appliance according to an embodiment of the present invention;
FIG. 2 is a flowchart of a specific implementation of step S12 in FIG. 1;
FIG. 3 is a flowchart of an iterative update process of a preset machine learning model according to an embodiment of the present invention;
FIG. 4 is a schematic diagram of a household appliance according to an embodiment of the present invention;
FIG. 5 is a schematic principle diagram of a system for automatic setting of an operating program of a household appliance according to an embodiment of the present invention; and
FIG. 6 is a schematic diagram of a process of automatic setting of an operating program of a household appliance in a typical application scenario according to an embodiment of the present invention.

In the accompanying drawings:
1 - Household appliance; 11 - Body; 12 - Control module; 13 - Communication module; 14 - Display and/or input unit; 15 - Power button; 16 - Door; 2 - Server; and 3 - Terminal device.

As described in the background, a manner of automatic setting of a program of a household appliance in the prior art adopts a memory mode, and each time the household appliance is turned on, the household appliance operates by default according to an operating program set when the household appliance was turned on last time. Since this manner cannot truly implement "think what the user wants", an existing household appliance is not intelligent enough.

The inventor of the present invention finds through analysis that one of reasons of the foregoing problem is that an existing solution of automatic setting of a program based on the memory mode ignores differences in use requirements of a user each time using the household appliance.

A washing machine is still used as an example. An existing washing machine in the memory mode ignores differences in the number, material, color, and thickness of items to be washed each time, and is not intelligent enough. Specifically, according to different activities the user engaged in on each day of the week, laundry requirements of the user on each day are also different correspondingly. For example, the user needs a program of sports clothes (a feature may be, for example, light and thin clothes) on Monday, or the user needs a program of work clothes (a feature may be, for example, easily deformable clothes) on Tuesday. In this case, the simple memory mode obviously cannot meet personalized requirements of the user on each day, resulting in that the user still needs to manually set a correct operating program each time using the household appliance.

In addition, in the prior art, a satisfaction of the user for automatic setting of the program of the household appliance does not have any feedback path, and the household appliance cannot adaptively optimize and iteratively update the logic of automatic setting of the program according to feedback of the user.

To resolve the foregoing technical problem, an embodiment of the present invention provides a method for automatic setting of an operating program of a household appliance, including: obtaining a current time in response to detecting that a preset trigger condition is met, where the preset trigger condition is used for triggering automatic setting of an operating program; inputting the current time into a preset machine learning model to obtain a current operating program, where the preset machine learning model is used for predicting the current operating program according to the current time and a historical operating program of the household appliance at a related time in history, and the related time is associated with the current time; and setting the household appliance to operate according to the current operating program.

In this way, in this implementation solution, an operating program that meets the user requirement at the current time can be automatically set more accurately when the household appliance operates this time, thereby further improving an intelligence degree of the household appliance and user satisfaction. Specifically, the current time when the household appliance meets the preset trigger condition is used as one of consideration factors and input into the preset machine learning model, and a current operating program is predicted through processing and computing by the preset machine learning model. The preset trigger condition may be, for example, that the household appliance is turned on, or may be, for example, that a function of automatic setting of an operating program of the household appliance is enabled. Further, different styles/habits of the user in using the household appliance at different times are fully considered based on the preset machine learning model, a use requirement of the user at the current time is predicted based on an operation history of the user at the related time, and then an adapted current operating program is automatically set. In this way, the operating program can be set more intelligently after the household appliance is turned on, so that the user is provided with the operating program that meets the user requirement at the current time more accurately.

Further, when performing prediction, the preset machine learning model comprehensively considers a historical operating program that is historically set for the household appliance at the related time. In this way, the preset machine learning model can learn and memorize behaviors of the user and use habits of the user according to a historical use record of the user, and predict a use requirement of the user when the household appliance operates this time according to historical data, thereby providing the user with a more appropriate personalized operating program.

Further, the preset machine learning model predicts and outputs the current operating program through the historical data. As the historical data continuously expands, the household appliance can be increasingly intelligent as the user uses the household appliance. When a use habit of the user changes, the household appliance can also make an adjustment in time. For household appliances of different users, as the use habits of different users are different, prediction results of the household appliances at the same current time are increasingly different. In this way, according to this implementation solution, the user can be allowed to personalize the operating program of the household appliance, and this personalization is with little or no perception of the user, and can be implemented without manual setting by the user, thereby greatly improving the intelligence degree of the household appliance and helping optimize user experience.

In order to make the foregoing objectives, features, and advantages of the present invention more apparent and easier to understand, specific embodiments of the present invention are described in detail below with reference to the accompanying drawings.

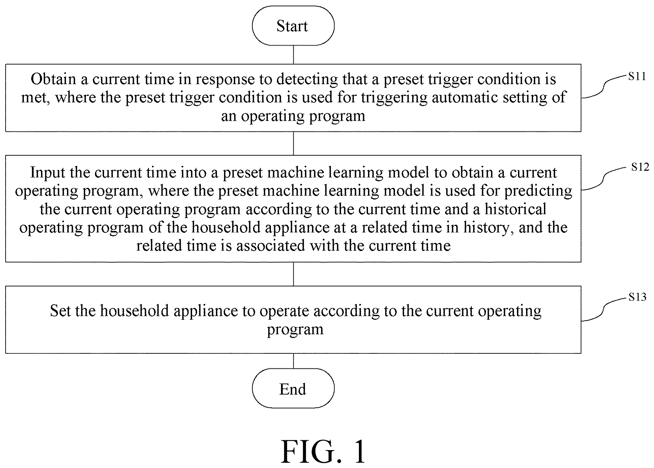

FIG. 1 is a flowchart of a method for automatic setting of an operating program of a household appliance according to an embodiment of the present invention.

At least one operating program (program) may be preset for the household appliance, and when the household appliance operates according to different operating programs, an operating parameter of at least one component in the household appliance is different. The operating program used when the household appliance operates this time may be set by the user, or may be adaptively set by the household appliance by using this implementation solution.

This implementation solution may be applied to a scenario of automatic setting of an operating program of a household appliance, and the household appliance may be, for example, a washing machine. The operating program may include parameters such as a water inlet volume, a water inlet temperature, a drum speed of the washing machine, and execution duration and a sequential execution order of operation steps (such as rinsing and dehydration).

This implementation solution may be performed by a control module. The control module may be, for example, a single-chip microcomputer of the household appliance, or may be, for example, a control unit in the household appliance dedicated to performing this implementation solution. In this embodiment, the control module may be arranged in a body of the household appliance.

In some embodiments, the household appliance may be, for example, a washing machine, a washer-dryer, a dryer, an air conditioner, or a cooktop. Next, this implementation solution is described in detail by using the washing machine as an example.

Specifically, referring to FIG. 1, the method for automatic setting of an operating program of a household appliance according to this embodiment may include the following steps.

Step S 11: Obtain a current time in response to detecting that a preset trigger condition is met, where the preset trigger condition is used for triggering automatic setting of an operating program.

Step S12: Input the current time into a preset machine learning model to obtain a current operating program, where the preset machine learning model is used for predicting the current operating program according to the current time and a historical operating program of the household appliance at a related time in history, and the related time is associated with the current time.

Step S13: Set the household appliance to operate according to the current operating program.

In some embodiments, the preset trigger condition may be, for example, that the household appliance is turned on. That the household appliance is turned on may include that the household appliance is powered on, and may further include that the household appliance is switched from a dormant state/a standby state to a working state.

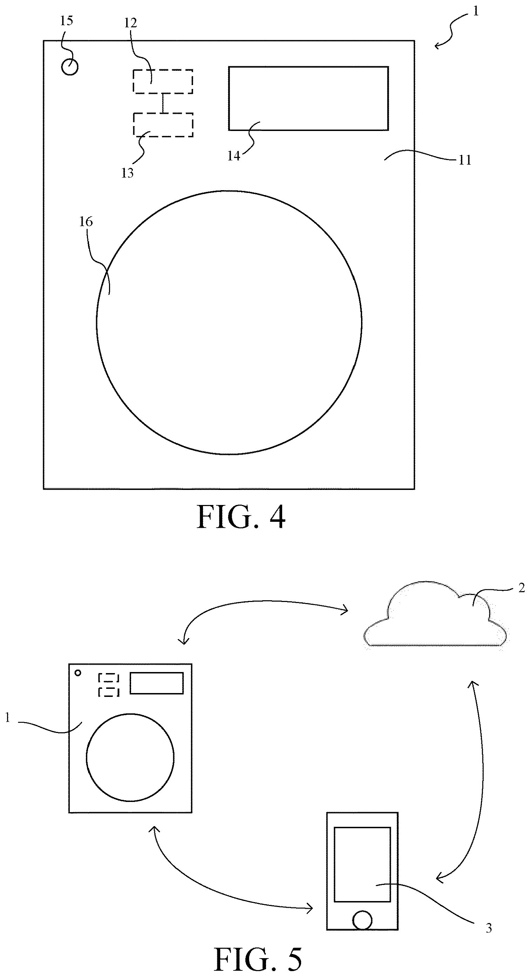

Further, a turn-on action of the household appliance may be triggered in response to a user operation. For example, the washing machine may be arranged with a power button 15 on a front panel (as shown in FIG. 4). When the user presses or touches the power button 15, the washing machine is turned on. Correspondingly, when detecting this turn-on action, the control module performs step S 11, and the current time is recorded as a turn-on time of the washing machine this time.

For another example, the turn-on action may be automatically triggered in response to detecting an action of opening a door 16 (as shown in FIG. 4) of the washing machine by the user, to further improve an intelligence degree and use convenience of the washing machine.

Alternatively, the turn-on action of the household appliance may be triggered regularly. For example, the user presets the turn-on time, and the household appliance is automatically turned on when the turn-on time is reached.

Further, after the washing machine is turned on, for example, after the user presses or touches the power button, a turn-on signal may be generated. After receiving the turn-on signal, a control module 12 (as shown in FIG. 4) obtains the current time. The current time may be time data generated after the turn-on signal is received, or may be time data generated when the washing machine starts to operate the operating program (for example, when the washing machine starts to fill with water).

In some embodiments, the preset trigger condition may further be, for example, that the function of automatic setting of an operating program of the household appliance is enabled. Specifically, the function of automatic setting of an operating program may be a function provided by the household appliance, and the user may select whether to use the function as required. For example, a shortcut button may be arranged on the washing machine, and in response to triggering the shortcut button, the control module determines that it is detected that the user uses the function of automatic setting of an operating program, that is, it is detected that the preset trigger condition is met.

In some embodiments, the current time may be obtained from a clock module arranged inside the washing machine. Alternatively, the clock module may be arranged outside the household appliance, and communicate with the control module.

Further, the preset machine learning model may receive the inputted current time, and predict the current operating program according to the received current time and the historical operating program historically executed by the household appliance at the related time. Correspondingly, the control module sets a specific operating parameter of the household appliance according to the prediction result of the preset machine learning model.

Further, the use habits of the user in using the household appliance at the associated related time are substantially the same as those at the current time. Correspondingly, the historical operating program set when the household appliance is turned on at the related time has a large probability of being adapted to the current operating program that needs to be set for turn-on of the household appliance this time. Further, the historical operating program may include an operating program automatically set at the related time in history when the household appliance is turned on. Specifically, the operating program automatically set at the related time in history may be, for example, the prediction result outputted by the preset machine learning model when the washing machine historically executes the solution of the embodiment shown in FIG. 1 at the related time. Alternatively, the historical operating program may be an operating program set by the user at the related time historically.

In this way, by using this implementation solution, an operating program that meets the user requirement at the current time can be automatically set more accurately when the household appliance operates this time, thereby further improving an intelligence degree of the household appliance and user satisfaction. Specifically, the current time when the household appliance meets the preset trigger condition is used as one of consideration factors and input into the preset machine learning model, and a current operating program is predicted through processing and computing by the preset machine learning model. The preset trigger condition may be, for example, that the household appliance is turned on, or may be, for example, that a function of automatic setting of an operating program of the household appliance is enabled. Further, different styles/habits of the user in using the household appliance at different times are fully considered based on the preset machine learning model, a use requirement of the user at the current time is predicted based on an operation history of the user at the related time, and then an adapted current operating program is automatically set. In this way, the operating program can be set more intelligently after the household appliance is turned on, so that the user is provided with the operating program that meets the user requirement at the current time more accurately.

Further, when performing prediction, the preset machine learning model comprehensively considers a historical operating program that is historically set for the household appliance at the related time. In this way, the preset machine learning model can learn and memorize behaviors of the user and use habits of the user according to a historical use record of the user, and predict a use requirement of the user when the household appliance operates this time according to historical data, thereby providing the user with a more appropriate personalized operating program.

Further, the preset machine learning model predicts and outputs the current operating program through the historical data. As the historical data continuously expands, the household appliance can be increasingly intelligent as the user uses the household appliance. When a use habit of the user changes, the household appliance can also make an adjustment in time. For household appliances of different users, as the use habits of different users are different, prediction results of the household appliances at the same current time are increasingly different. In this way, according to this implementation solution, the user can be allowed to personalize the operating program of the household appliance, and this personalization is with little or no perception of the user, and can be implemented without manual setting by the user, thereby greatly improving the intelligence degree of the household appliance and helping optimize user experience.

In a specific implementation, an association relationship between the related time in history and the current time may include: the related time and the current time have a preset time interval, and the preset time interval includes a calendar week.

Specifically, in this implementation solution, a measurement unit of time may be days. For example, assuming that the current time is Monday, correspondingly, the related time may be Monday of each week in history, and the preset machine learning model may predict, according to the historical operating program historically set when the household appliance is turned on every Monday, the current operating program that should be automatically set this Monday.

In this way, the operating program set by the user when using the household appliance every day is periodically recorded in units of weeks, which can reflect differences between the use habits of the user in the household appliance at different times, so that the current operating program is set in a more targeted manner to more intelligently adapt to the use requirements of the user at the current time. Further, when the use habits of the user have a cyclical trend, the cyclical feature is reflected by the preset time interval, so that a predicted current operating program conforms to the cyclical trend. Further, the preset time interval includes the calendar week, which can also adapt to work, pace of life, and habits of most users.

In some embodiments, a set operating program and a corresponding trigger time (for example, the turn-on time) each time the preset trigger condition is met (for example, each turn-on) in history may be recorded.

In step S 12, when performing prediction, the preset machine learning model may determine the associated related time according to the current time, and then determine a historically recorded operating program whose turn-on time is the related time as the historical operating program referenced by the model prediction this time.

In a variant example, a specific interval size of the preset time interval may be adjusted according to living habits of the user and the use habits in the household appliance. For example, if a use habit change period of using the household appliance by the user is three calendar days, the preset time interval may be set to three calendar days.

In an actual application, the preset time interval may be uniformly set to one calendar week (that is, 7 calendar days) when the household appliance leaves the factory. A specific value of the preset time interval may be adjusted as required during use of the household appliance by the user.

In a specific implementation, different times may correspond to different preset machine learning models. Specifically, each day within a single preset time interval may have a corresponding preset machine learning model.

For example, an example in which the preset time interval is a calendar week is used. A number of the preset machine learning models may be seven, respectively corresponding to each day of the calendar week. In this way, seven days in a week respectively correspond to one of the seven preset machine learning models, and each of the preset machine learning models can focus on predicting an operating program required when the user uses the household appliance that day.

In a specific implementation, the preset machine learning models respectively corresponding to different times are the same when the household appliance is turned on for the first time in history, and independently change as the household appliance is used.

Specifically, that the household appliance is turned on for the first time in history may include that the household appliance is first turned on after delivery from the factory, or may include that the household appliance is first operated by the user to be turned on in history.

Further, seven same preset machine learning models may be preset when the household appliance leaves the factory, and the preset machine learning models are each iteratively updated according to the use habits of the user at the corresponding time. In other words, a same preset machine learning model is used by default initially every day, and as the user uses the preset machine learning model, differences are gradually generated according to the use habits of the user.

In this way, a program burning process performed when the household appliance is factory set can be simplified, helping reduce manufacturing costs and process complexity. Further, with the use of the user, each model gradually accumulates historical data for learning and iterative update according to a program setting habit of the user when the user uses the household appliance at the corresponding time, thereby intelligently personalizing the operating program according to the use of the user. In some embodiments, the control module may have a memory function, and can actively collect the current time each time the household appliance is turned on and the set current operating program, to use the current time and the current operating program as a training basis of the preset machine learning model, so that the preset machine learning model can more accurately predict a current operating program to be executed at a next current time.

Specifically, the collected data may include a plurality of data groups, where each data group includes current time data and current operating program data that correspond to each other. These data groups may form a training set. After the training set is inputted into the preset machine learning model, the preset machine learning model learns correspondences in the data groups to predict the current operating program to be executed at the next current time.

It should be noted that, a related time corresponding to each current time is a "current time" historically inputted into the preset machine learning model. Correspondingly, the current time inputted into the preset machine learning model by performing the method shown in FIG. 1 this time also becomes a related time of the next current time when the household appliance is turned on at the preset time interval next time.

Further, the plurality of data groups may be further divided according to the preset time interval, to respectively train/iteratively update a corresponding preset machine learning model. For example, all data groups including each Monday in history and a corresponding historical operating program may be inputted into a preset machine learning model corresponding to Monday for model training. For another example, all data groups including each Wednesday in history and a corresponding historical operating program may be inputted into a preset machine learning model corresponding to Wednesday for model training.

Since data groups inputted by different preset machine learning models are different, correspondences obtained through calculation and analysis of the preset machine learning models are also different. In this case, different correspondences may be used according to different current times, and different current operating programs may be outputted.

Further, as data groups accumulated in the preset machine learning models gradually increase, differences between the preset machine learning models also gradually increase, and the differences remain consistent with differences in the use requirements of the user for the household appliance at different times.

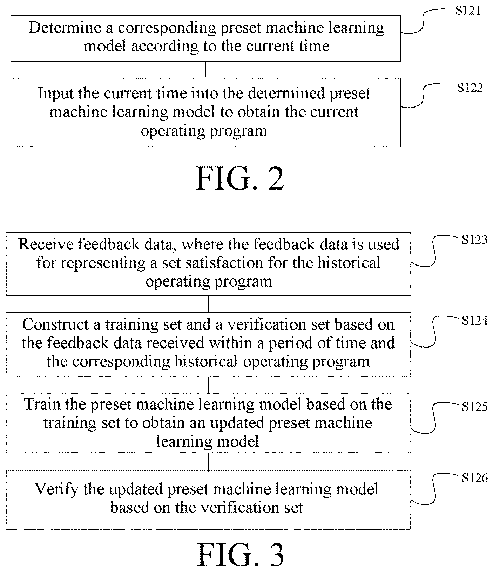

In a specific implementation, referring to FIG. 2, step S12 may include the following steps.

Step S121: Determine a corresponding preset machine learning model according to the current time.

Step S122: Input the current time into the determined preset machine learning model to obtain the current operating program.

For example, the washing machine may be preset with seven preset machine learning models, corresponding to Monday to Sunday respectively. If the user turns on the washing machine on a Monday, the Monday is used as the current time. The preset machine learning model corresponding to Monday is invoked according to the current time of Monday. Further, Monday is inputted into the preset machine learning model invoked this time, and the preset machine learning model predicts and outputs a current operating program to be executed this Monday according to a historical operating program historically set when the washing machine is turned on on Monday.

In this way, training and prediction are performed by using a respective preset machine learning model at different times, which is beneficial to improving accuracy of model prediction. Further, each model is trained and iteratively updated by using historical data at a respective related time, so that each model is more focused on predicting a corresponding operating program according to the use habits of the user at a respective corresponding time.

In a specific implementation, the preset machine learning model is iteratively updated as a number of uses of the household appliance increases. Specifically, both the current time each time the household appliance is turned on and the set current operating program may be added to the historical data for retraining the preset machine learning model. In this way, as the user continuously trains the preset machine learning model by using accumulation of data, prediction of the preset machine learning model is more targeted and can reflect personalization of the user.

Using a washing machine as an example, the washing machine may record the current time each time the washing machine is turned on and the current operating program. The recorded current time is in a one-to-one correspondence with the recorded current operating program. The data group including the current time and the current operating program further forms a historical data set. A number of elements included in the historical data set increases with each use of the washing machine, and the historical data set is continuously updated and expanded correspondingly.

As the historical data set is updated and expanded, the preset machine learning model may be continuously iteratively updated correspondingly.

In some embodiments, different preset machine learning models associated with different times may be obtained through training by using different subsets of the historical data set respectively. Different subsets may include data groups corresponding to different times within the preset time interval.

In some embodiments, the preset machine learning model may be constructed by using a machine learning algorithm. The machine learning algorithm may be, for example, decision tree, naive Bayes classification, least squares regression, logistic regression, support vector machine, neural network, or deep learning.

In a specific implementation, as shown in FIG. 3, an iterative update process of the preset machine learning model may include the following steps.

Step S123: Receive feedback data, where the feedback data is used for representing a set satisfaction for the historical operating program.

Step S124: Construct a training set and a verification set based on the feedback data received within a period of time and the corresponding historical operating program.

Step S125: Train the preset machine learning model based on the training set to obtain an updated preset machine learning model.

Step S126: Verify the updated preset machine learning model based on the verification set.

Specifically, in step S123, the feedback data may come from the user. For example, the feedback data inputted by the user may be received through a display and/or input unit.

Further, the feedback data may include satisfaction evaluation of at least one parameter, and the parameter may be selected from dryness, noise, a twine degree, and correctness of automatic setting of an operating program. For example, a satisfaction of any one of the foregoing parameters may be represented in the form of a score. The twine degree may be a twine degree of the clothes.

Using an integrated washer dryer as an example, factors that may affect user experience and a washing effect include dryness of the clothing after washing, noise generated in a washing process, a twine degree of the clothes, and correctness of automatic setting of an operating program.

In this way, the preset machine learning model can optimize and update the setting that the user is unsatisfied or not very satisfied in a more targeted manner.

Further, through statistics and analysis of the feedback data, it can be determined whether the setting of the at least one parameter in the historical operating program fed back by the feedback data is appropriate, and then a specific value of the parameter whose setting is inappropriate can be adjusted. For example, a historical operating program historically set after the preset trigger condition is met on Tuesday is soft wash, the user uploads the feedback data after the operation of the household appliance ends, and the feedback data includes dissatisfaction with the noise made by the household appliance during operation. Correspondingly, in step S125, when the preset machine learning model is updated, the feedback data may be considered, and a rotation speed of a drum during soft washing corresponding to Tuesday may be reduced to reduce the noise.

In this way, when the preset machine learning model predicts the current operating program at the current time, a determined current operating program more meets the user requirement, or at least the specific value of the at least one parameter in the current operating program is more accurate and meets the user's mind.

In some embodiments, after execution of the current operating program ends, the household appliance may further perform the steps: transmitting prompt information, where the prompt information includes an opinion feedback table; and receiving the opinion feedback table, and generating the feedback data based on the opinion feedback table.

For example, after each washing ends, the washing machine may transmit the prompt information to the user through an interaction panel, such as displaying the opinion feedback table on a UIM. The opinion feedback table includes an option of the at least one parameter for the user to evaluate the parameter. For example, the option may be satisfactory/appropriate (for example, may be denoted as 1) or unsatisfactory/inappropriate (for example, may be denoted as 0).

In a variant example, the satisfaction may alternatively be in the form of a score. For example, unsatisfactory to satisfactory correspond to a score of 1 to 5 respectively, unsatisfactory is a score of 1, and satisfactory is a score of 5.

After completing the opinion feedback table, the user may click and upload the opinion feedback table. In response to receiving the opinion feedback table, the control module may generate the feedback data according to evaluation of each parameter in the opinion feedback table.

In this way, the user is actively prompted to submit the feedback, and as much the feedback data as possible is collected for training the model, thereby optimizing a model training effect.

In a specific embodiment, the prompt information and/or the opinion feedback table may be transmitted through the display and/or input unit of the household appliance, and the display and/or input unit may be the user interface module (UIM). For example, after this washing ends, the prompt information pops up on the UIM to prompt the user to feed back an opinion. In response to the user clicking "agree with feedback opinion", the control module further displays the opinion feedback table on the UIM for the user to fill in. In this way, the user is prompted for the feedback through a human-computer interaction interface arranged on the household appliance, and the feedback data is received, to be used as a basis for model training.

In a specific implementation, the prompt information and/or the opinion feedback table is transmitted through a terminal device associated with the household appliance. For example, after this washing ends, the control module may transmit an operating program execution completion message to the terminal device, and the terminal device transmits the prompt information and receives the opinion feedback table submitted by the user. In this way, the user can receive the opinion feedback table and upload the feedback data anytime and anywhere, so that a feedback process is more convenient.

In a specific implementation, the prompt information and the opinion feedback table may be displayed or received through different media. For example, the prompt information may be transmitted through the display and/or input unit of the household appliance, and the opinion feedback table may be received on a mobile phone of the user.

In some embodiments, the display and/or input unit may be arranged on the body of the washing machine, and may communicate with the terminal device in a wireless communication manner. The wireless communication manner may be, for example, the wireless fidelity (Wi-Fi) technology or near field communication (NFC).

Specifically, the terminal device may include a mobile terminal device, such as a mobile phone, a tablet computer, or a notebook computer of the user. Alternatively, the mobile terminal device may be, for example, another smart household appliance located in a same local area network as the household appliance, such as a refrigerator or a cooker hood in a house of the user.

Further, the opinion feedback table is transmitted to the mobile phone of the user through a wireless signal. After the user scores and evaluates the opinion feedback table according to the satisfaction of the user, the terminal device may further extract the feedback data from the opinion feedback table submitted by the user, and then return the feedback data to the washing machine through wireless transmission or transmit the feedback data to a cloud server.

In a specific implementation, in step S124, the data group in the historical data set may correspond to the feedback data, to obtain the historical data set. Specifically, the historical data set includes a plurality of data groups, and each data group includes three pieces of data that have a correspondence with each other: time data, operating program data, and feedback data.

Further, the historical data set may be divided according to a specific ratio to obtain a training set and a verification set. The training set may be used for generating the preset machine learning model, and then the verification set is used for verifying whether a parameter of the preset machine learning model obtained through training is appropriate.

In some embodiments, since the training set and the verification set play different roles in the iterative update process of the preset machine learning model, requirements for a number of elements in the set may also be different. Generally, the training set includes more data groups than the verification set, and a ratio of the two may be, for example, 6 (the training set): 4 (the verification set), or may be, for example, 7: 3.

Further, if a verification result of step S126 indicates that the accuracy of a prediction result of the updated preset machine learning model is higher than a preset threshold, it may be determined that the updated preset machine learning model is appropriate. Correspondingly, the updated preset machine learning model may be used for performing the solution shown in FIG. 1 next time.

If the verification result of step S126 indicates that the accuracy of the prediction result of the updated preset machine learning model is lower than the preset threshold, it indicates that the updated preset machine learning model is inappropriate. Correspondingly, steps S125 and S126 may be re-performed to retrain the preset machine learning model until the prediction result of the updated preset machine learning model for the time data in the verification set and the accuracy of the corresponding operating program data in the verification set are higher than the preset threshold.

In some embodiments, when step S125 and step S126 are re-performed, the training set and the verification set may be re-divided.

Further, in an example in which different times correspond to different preset machine learning models, the historical data set may be applicable to all preset machine learning models. Each preset machine learning model may be trained and iteratively updated according to the historical operating program and the feedback data corresponding to the corresponding time.

In this way, the model is automatically optimized and improved according to satisfaction feedback of the user set for the operating program when the household appliance is used historically, so that a more appropriate and accurate operating program is automatically set after the household appliance is turned on next time, thereby significantly improving the satisfaction of the user.

In a variant example, different preset machine learning models may correspond to different historical data sets. Correspondingly, each data group in the historical data set may include the historical operating program and the corresponding feedback data.

For example, seven preset machine learning models are provided, and each corresponds to each day of the calendar week.

In this case, seven historical data sets may be constructed to respectively correspond to the seven preset machine learning models. In this case, the time data may be omitted in the historical data set.

Further, as a number of uses of the household appliance increases, a data volume in the historical data set increases correspondingly, and data volumes respectively included in the corresponding training set and the corresponding verification set also increase continuously. For example, each time after the washing machine is used, a collected new data group is included in the historical data set, and the training set and the verification set need to be reallocated to retrain and verify the preset machine learning model.

In a variant example, the historical data set may be randomly divided into three subsets: a training set, a verification set, and a test set according to a specific ratio. After the updated preset machine learning model obtained through training based on the training set succeeds in verification based on the verification set, final setting may be further performed based on the test set. If the test succeeds, the updated preset machine learning model may be put into daily use of the household appliance. Otherwise, after a new subset is formed through reallocation, training, verification, and test processes are repeated.

In a specific implementation, the feedback data received within a period of time, the corresponding historical operating program, and the time data may be first preprocessed before the training set and the verification set are constructed.

Specifically, the data preprocessing may include data cleaning, to achieve a denoising effect. For example, abnormal data in the obtained data, such as a peak value in a piece of continuous data, may be removed. For another example, incorrect data, such as data that has a packet loss during transmission, may be removed.

FIG. 4 is a schematic diagram of a household appliance 1 according to an embodiment of the present invention.

Specifically, referring to FIG. 4, the household appliance 1 according to this embodiment may include a body 11.

Further, the household appliance 1 may further include a control module 12 arranged on the body 11, and the control module 12 is configured to perform the method for automatic setting of an operating program of a household appliance in the embodiments shown in FIG. 1 to FIG. 3.

Further, the household appliance 1 may include an interaction panel to implement human-computer interaction. The interaction panel may include a touch pad, a display screen, and the like.

The interaction panel may include a display and/or input unit 14. In some embodiments, the display and/or input unit 14 may be a user interface module (UIM), configured to display a setting parameter or a status of a household appliance and/or receive a control instruction inputted by a user.

Further, the interaction panel may further include a cover plate (not shown in the figure) arranged in front of the display and/or input unit 14, to at least provide protection. The cover plate may be, for example, a front panel of a door 16 of the household appliance 1, or may be, for example, an independent glass plate that covers the front of the UIM. In some embodiments, the display and/or input unit 14 may be in close contact with a rear side of the cover plate, to receive, for example, an input signal inputted by the user by touching the cover plate. The display and/or input unit 14 may include a light-emitting member to transmit light through a corresponding region of the cover plate. In this implementation solution, a front-rear direction refers to a depth direction of the household appliance 1. The front or a front side refers to a direction facing the user when the household appliance 1 is in use, and the rear or the rear side refers to a direction facing away from the user when the household appliance 1 is in use.

Further, the interaction panel may include a gesture sensing region, used for sensing and responding to a gesture made by the user within a specific distance in front of the household appliance 1, to implement gesture control. In some embodiments, the gesture sensing region may cover the entire interaction panel, or may correspond to a part of the region of the interaction panel. For example, a preset trigger condition may be satisfied by detecting the gesture of the user, and the gesture may be used for enabling a function of automatic setting of an operating program of the household appliance 1.

FIG. 4 exemplarily shows the household appliance 1 by using a washing machine as an example. For a washing machine with a function of automatic setting of an operating program (also referred to as an operating program automatic setting function), to more intelligently provide an appropriate operating program according to a use habit of the user, in this implementation solution, the method for automatic setting of an operating program of a household appliance shown in FIG. 1 to FIG. 3 is performed by using the control module 12. According to the method, the operating program is intelligently and automatically set according to a different washing requirement of the user on each day, to improve user experience. Further, a preset machine learning model used for outputting the operating program can also be iteratively updated according to the time of each use, the operating program, and satisfaction data fed back by the user.

Further, the household appliance 1 may be selected from a washing machine, a washer-dryer, and a dryer. The use of such household appliances usually reflects a periodic rule according to work and life habits of the user. Therefore, through learning of work and life rules of the user, accuracy of predicting the operating program can be increased, and user satisfaction can be further improved.

In this way, for a feature that the user has greatly different laundry styles at different times (for example, weekdays and weekends), the method in this implementation solution is applied to the household appliance 1 such as a washing machine, so that the washing machine can more intelligently provide a washing and protection function for the user. Further, in addition to the washing machine, the method for automatic setting of an operating program of a household appliance according to this implementation solution may further be applied to other household appliances 1 of washing/drying types, so that an entire washing-drying process is more intelligent and convenient.

In some embodiments, still referring to FIG. 4, the household appliance 1 may further include: a communication module 13, arranged on the body 11, where the control module 12 receives feedback data through the communication module 13. In this way, the communication module 13 may implement communication, for example, in a wired or wireless form. The household appliance 1 establishes a communication connection to the outside (for example, a server) through the communication module 13, to implement remote update of the preset machine learning model.

Further, the communication module 13 may communicate with the control module 12 in a wired and/or wireless manner.

In some embodiments, the control module 12 may receive the feedback data through the display and/or input unit 14. Further, prompt information may be transmitted through the display and/or input unit 14. Feedback data inputted by the user may also be received through the display and/or input unit 14. In this way, the user can transmit a satisfaction through network communication, or can directly input feedback information through the display and/or input unit 14, thereby improving convenience of feedback.

In some embodiments, the control module 12 may communicate with a terminal device 3 of the user through the communication module 13. For example, the feedback data may be received from the terminal device 3 through the communication module 13.

It should be noted that FIG. 4 only exemplarily shows possible arrangement positions of the control module 12, the communication module 13, the display and/or input unit 14, a power button 15, and the door 16 on the body 11 of the household appliance 1. In actual application, mutual position relationships and specific arrangement positions on the household appliance 1 of the modules/components may be adjusted according to requirements.

Further, the modules may be independent of each other, or may be integrated on a same chip or integrated into a same functional module. For example, the control module 12 and the communication module 13 may be integrated together.

Further, the modules may communicate with each other in a wired or wireless manner.

FIG. 5 is a schematic principle diagram of a system for automatic setting of an operating program of a household appliance according to an embodiment of the present invention.

Specifically, referring to FIG. 5, the system for automatic setting of an operating program of a household appliance according to this embodiment may include: a household appliance 1 (shown in FIG. 4), including a body 11 and a control module 12, where the control module 12 is configured to perform the method for automatic setting of an operating program of a household appliance according to the embodiments shown in FIG. 1 to FIG. 3; and
a server 2, communicating with the control module 12, where the server 2 is configured to synchronize the preset machine learning model to the control module 12.

Further, the server 2 may be configured to iteratively update the preset machine learning model based on the received historical operating program and the received feedback data of the household appliance 1, and synchronize the updated preset machine learning model to the control module 12.

In some embodiments, the server 2 may be integrated into the household appliance 1 to be dedicated to dynamically updating the preset machine learning model for the household appliance 1.

In some embodiments, the server 2 may be, for example, a backend server arranged at a manufacturer or a designer of the household appliance 1. Alternatively, the server 2 may be, for example, a cloud server. A single server 2 may communicate with a plurality of household appliances 1. For each household appliance 1, the server 2 receives a historical operating program and corresponding feedback data of the household appliance 1, to dynamically update the preset machine learning model for the household appliance 1 in a targeted manner.

In this way, the server 2 may be configured to store historical data, including the historical operating program and corresponding feedback data, and retrain the model based on the historical data, so that a current operating program predicted based on an updated model when the household appliance 1 is turned on next time is more in line with a use habit of the user at the current time. Further, the server 2 is arranged outside the household appliance 1, which helps reduce a number of components in the household appliance 1 and reduce costs.

In some embodiments, the server 2 may be arranged outside the household appliance 1, and communicate with the control module 12. For example, the server 2 may be arranged in a cloud and communicate with the control module 12 through a network.

In this way, the server 2 can store more historical data and provide higher computing power for training and verifying the preset machine learning model.

Still referring to FIG. 5, in some embodiments, the system for automatic setting of an operating program of a household appliance according to this embodiment may further include: a communication module 13, arranged on the body 11, where the control module 12 communicates with the server 2 through the communication module 13.

Further, the system for automatic setting of an operating program of a household appliance according to this embodiment may further include: a terminal device 3, such as a mobile phone or a tablet computer of the user, or another smart appliance located in a same local area network as the household appliance 1. The terminal device 3 may communicate with the communication module 13 of the household appliance 1 or the server 2 through a built-in wireless network communication function.

In a specific implementation, the communication module 13 may include a WI-FI module, and the control module 12 remotely uploads obtained data (for example, time data, operating program data, and feedback data) to the server 2 through the WI-FI module.

Further, the WI-FI module may be further configured to upgrade the preset machine learning model through the over-the-air (OTA) technology. For example, an OTA platform may be constructed on the server 2, and the updated preset machine learning model is upgraded by the OTA platform through the WI-FI module.

In this way, the household appliance 1 establishes a communication connection to the outside (for example, the server 2) through the communication module 13, to implement remote update of the preset machine learning model.

Further, the system for automatic setting of an operating program of a household appliance according to this embodiment may further include: a display and/or input unit 14, arranged on the body 11 and communicating with the control module 12, where the display and/or input unit 14 is configured to receive feedback data. In this way, the user may locally submit the feedback data on the household appliance 1, and the household appliance 1 summarizes the feedback data and the corresponding historical operating program to the server 2, so that the server 2 iteratively updates the preset machine learning model based on these data.

In a typical application scenario, with reference to FIG. 4 to FIG. 6, an example in which the household appliance 1 is a washing machine is used. The control module 12 of the washing machine may perform the method in the embodiments shown in FIG. 1 to FIG. 3, and the washing machine may include a storage module (not shown in the figure) configured to store the preset machine learning model.

Specifically, seven preset machine learning models provided, and each corresponds to Monday to Sunday. Different calendar days may correspond to different operating programs according to the habits of the user. The operating program may include a washing program that specifically needs to be executed and a related parameter.

In response to detecting that the washing machine is turned on, the control module 12 obtains a current time and inputs the current time into a corresponding preset machine learning model. Assuming that the current time is Monday, the control module 12 may input Monday into a preset machine learning model corresponding to Monday, to obtain a current operating program predicted by the preset machine learning model.

Then, the control module 12 sets the components of the washing machine to operate according to the predicted current operating program.

After the operation of the current operating program ends, the control module 12 transmits prompt information through the display and/or input unit 14 to prompt the user to feed back an opinion.

In response to receiving feedback data, the control module 12 transmits the feedback data to the server 2 (for example, a cloud server) through the communication module 13. Further, the control module 12 transmits the current time and the current operating program that trigger current feedback to the server 2 through the communication module 13.

In response to receiving the feedback data, the corresponding current time, and the current operating program, the server 2 may retrain the preset machine learning model corresponding to Monday based on newly received data and historically received historical data related to Monday.

Further, the communication module 13 of the washing machine communicates with the server 2 to remotely update the preset machine learning model.

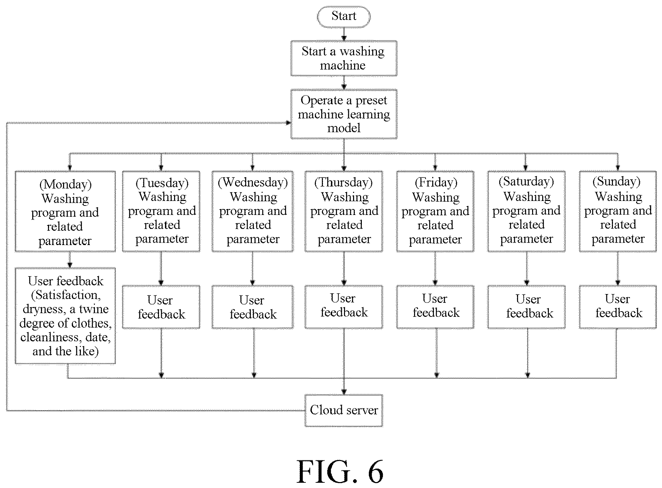

In a variant example, still referring to FIG. 6, a specific process of iteratively updating the preset machine learning model may further include:
First, the washing machine is connected to a network through the WI-FI module, and uploads the time data and the operating program data collected by the washing machine to the server 2 in the cloud.

Then, the user provides feedback for this washing performance through the terminal device 3. The feedback data is stored in the server 2 of the cloud. Specifically, an opinion feedback table may be filled in through an application (APP) installed on the terminal device 3, to generate the feedback data. In response to receiving the feedback data and the historical operating program from the server 2 and the washing machine respectively, the server 2 may perform the steps shown in FIG. 3 to iteratively update the preset machine learning model based on the received data The server 2 may match the feedback data and the historical operating program according to a quantity of times the data is received, to determine the historical operating program corresponding to the feedback data. Further, each time the user feeds back feedback data, the server 2 may be correspondingly triggered to iterative update the preset machine learning model once.

Finally, the server 2 synchronously updates the updated preset machine learning model to the washing machine through the communication module 13 of the washing machine by using the OTA platform.

Although specific implementations are described above, the implementations are not intended to limit the scope disclosed in this application, even if only a single implementation is described relative to a specific feature. The feature example provided in this application is intended to be illustrative rather than limiting, unless otherwise stated. In a specific implementation, technical features of one or more dependent claims may be combined with technical features of independent claims, and technical features from corresponding independent claims may be combined in any proper manner rather than only in a specific combination enumerated in the claims.

Although the present invention is disclosed above, the present invention is not limited thereto. Any person skilled in the art may make various changes and modifications without departing from the spirit and scope of the present invention. Therefore, the protection scope of the present invention shall be subject to the scope defined by the claims.

## Claims

1. A method for automatic setting of an operating program of a household appliance, **characterized by** comprising:
obtaining a current time in response to detecting that a preset trigger condition is met, wherein the preset trigger condition is used for triggering automatic setting of an operating program;
inputting the current time into a preset machine learning model to obtain a current operating program, wherein the preset machine learning model is used for predicting the current operating program according to the current time and a historical operating program of the household appliance at a related time in history, and the related time is associated with the current time; and
setting the household appliance to operate according to the current operating program.

2. The method according to claim 1, **characterized in that** the related time being associated with the current time comprises: the related time and the current time have a preset time interval, and the preset time interval comprises a calendar week.

3. The method according to claim 1 or 2, **characterized in that** different times correspond to different preset machine learning models, and the inputting the current time into a preset machine learning model to obtain a current operating program comprises:
determining a corresponding preset machine learning model according to the current time; and
inputting the current time into the determined preset machine learning model to obtain the current operating program.

4. The method according to any of the previous claims, **characterized in that** seven preset machine learning models are provided and each corresponds to each day of the calendar week.

5. The method according to any of the previous claims, **characterized in that** the preset machine learning models respectively corresponding to different times are the same when the household appliance is turned on for the first time in history, and independently change as the household appliance is used.

6. The method according to any of the previous claims, **characterized in that** the preset machine learning model is iteratively updated as a number of uses of the household appliance increases.

7. The method according to any of the previous claims, **characterized in that** an iterative update process of the preset machine learning model comprises:
receiving feedback data, wherein the feedback data is used for representing a satisfaction set for the historical operating program;
constructing a training set and a verification set based on the feedback data received within a period of time and the corresponding historical operating program;
training the preset machine learning model based on the training set to obtain an updated preset machine learning model; and
verifying the updated preset machine learning model based on the verification set.

8. The method according to any of the previous claims, **characterized in that** the feedback data comprises a satisfaction score for at least one parameter, and the parameter is selected from dryness, noise, a twine degree, and correctness of the automatic setting of an operating program.

9. The method according to any of the previous claims, **characterized by** further comprising:
transmitting prompt information, wherein the prompt information comprises an opinion feedback table; and
receiving the opinion feedback table, and generating the feedback data based on the opinion feedback table.

10. The method according to any of the previous claims, **characterized in that** the prompt information and/or the opinion feedback table are transmitted through a display and/or input unit of the household appliance, and/or the prompt information and/or the opinion feedback table are transmitted through a terminal device associated with the household appliance.

11. A household appliance, **characterized by** comprising:
a body (11);
a control module (12), arranged on the body (11), the control module (12) being configured to perform the method according to any one of claims 1 to 10.

12. The household appliance according to claim 11, **characterized in that** the household appliance is selected from a washing machine, a washer-dryer, and a dryer.

13. The household appliance according to claim 11 or 12, **characterized by** further comprising:
a communication module (13), arranged on the body (11), the control module (12) receiving feedback data through the communication module (13); and/or
a display and/or input unit (14), arranged on the body (11), the control module (12) receiving the feedback data through the display and/or input unit (14).

14. A system for automatic setting of an operating program of a household appliance, **characterized by** comprising:
a household appliance (1), comprising a body (11) and a control module (12), the control module (12) being configured to perform the method according to any one of claims 1 to 10; and
a server (2), communicating with the control module (12), the server (2) being configured to synchronize the preset machine learning model to the control module (12).

15. The system according to claim 14, **characterized in that** the server (2) is configured to iteratively update the preset machine learning model based on a received historical operating program and feedback data of the household appliance (1), and synchronize the updated preset machine learning model to the control module (12).
